# EUROPEAN PATENT SPECIFICATION

(11) **EP 2 522 410 B1**
(45) Date of publication and mention of the grant of the patent: **17.01.2018**
(21) Application number: 11166044.5
(22) Date of filing: 13.05.2011
(51) Int. Cl.: C05B 7/00, B01D 11/02, C05G 3/00

(54) **Process for the recovery of extinguihsing powders**
Verfahren zur Aufbereitung von Löschpulver
Procede pour le recyclage de poudre extinctrice

(43) Date of publication of application: 14.11.2012
(73) Proprietor: PROPHOS CHEMICALS S.r.l., 26037 San Giovanni in Croce (CR) (IT)
(72) Inventor: Michelotti, Marco, 26034 Drizzona (IT)
(74) Representative: Villa, Livia

(56) References cited:
- DE-A1- 4 142 919
- DE-A1- 10 063 918
- DE-A1-102004 024 697
- DE-A1-102005 063 039
- US-A1- 2005 274 164
- US-B1- 6 312 493

## Description

### FIELD OF THE INVENTION

The present invention concerns a process for the recovery of extinguishing powders, the related plant for its implementation, and the products obtained thereby such as fertilizers for agricultural use and catalysts for adhesives to be used in the wood industry.

In particular, said process is based on the use of exhausted extinguishing powders as starting materials, which, when suitably treated, enable the recovery of compounds suitable for use as fertilizers or catalysts for adhesives.

### STATE OF THE ART

In the fire-fighting sector, the European Committee for Standardisation (CEN) has defined various classes of fire depending on the nature of the combustible material which generated it:
- fires of class A, generated by solid combustible materials, such as wood, paper, leather, rubber and derivatives, textiles, with the exception of metals;
- fires of class B, generated by liquid combustible materials, such as hydrocarbons, alcohols, solvents, mineral oils, ethers, gasolines and the like, and by liquefiable solids;
- fires of class C, generated by gaseous combustible materials, such as hydrogen, methane, butane, acetylene, propylene;
- fires of class D, generated by combustible metals, such as potassium, sodium, and their alloys, magnesium, zinc, zirconium, titanium and aluminium powders; and
- fires of class F, generated by oils and fats in cooking appliances.

A fire of class E is also defined (not included in the CEN), referring to live electrical equipment, such as transformers, alternators, switches, electrical panels.

There are essentially three types of extinguishing agents which act respectively by smothering, cooling or chemical reaction; these actions may be (and generally are) combined.

Chemical reaction agents are those that either chemically modify the combustible material or the supporter of combustion to render them no longer combustible, or are themselves chemically modified to produce smothering or cooling agents. Typical examples are chemical or extinguishing powders and halogenated hydrocarbons, also known as halons, which are now banned as they are very damaging to the stratospheric ozone layer. Alternatives to the latter with low environmental impact exist, but they are very expensive extinguishers with limited efficiency.

Chemical powders or extinguishing powders, being probably the most common extinguishing agent, have peculiar characteristics, in that they chemically modify by the action of heat and release gases, thus leaving a non-combustible or even active residue. The most common type, due to its universal use and high effectiveness, is the so-called polyvalent powder (known as powder ABC), which is mainly composed of monoammonium phosphate (NH₄)H₂PO₄, ammonium sulphate (NH₄)₂SO, colouring additives and fluidifying agents. Typically, ammonium phosphate is in a percentage of 20% to 90% (high extinguishing capacity). In the so-called standard powder, said percentage is 40%.

Urea (Monnex powders) and potassium bicarbonate (Purple-K powders), known as high extinguishing capacity powders BC, are used to a limited extent, while being utilised in the petrochemical industry and in airports for their exceptional effectiveness on fires from liquid or gaseous fuels; however, they are not effective on solid materials. Of special use is sodium chloride, effective on fires generated by metals (sodium, magnesium, aluminium), which smothers the fire by melting, then re-forming an impermeable crust. Sodium bicarbonate is also an extinguisher, being the base product of powders BC with ordinary extinguishing capacity and now no longer in use.

With regard to polyvalent extinguishing powders, i.e. the most widespread, silicone-type additives are added to said compositions in order to ensure their water repellence. The use of silicone oil in production makes the recovery of extinguishing powder waste very problematic.

Each year about 10,000 tonnes of new product (mainly in fire extinguishers) are put onto the market in Italy alone; under current legislation, every 36 months the extinguishing powder is deemed to be exhausted and should be disposed of as waste. However, only one third of these 10,000 tonnes is regularly disposed of. It is assumed that most of the waste is instead dispersed onto the land, with serious damage to the environment or even illegally returned to the market as fresh product. DE10063918A1 concerns the re-utilization of fire extinguisher powder, especially of class ABC and BC, which has been coated with an anti-clumping layer of silicon, wax or the like, said re-utilization being effected by dispersing and dissolving the powder with surfactants in a liquid and adding an inorganic acid to further decompose the powder. However, the use of surfactants, particulary in combination with polyasparaginate, makes this process non environmentally-friendly and non economically convenient. There is therefore a greatly felt need to resolve the problem of the large amounts of exhausted extinguishing powder that accumulate each year, with the aim of minimizing the environmental damage arising mainly from the presence of silicone additives in said powders.

It is accordingly the object of the present invention to identify a method for treating exhausted extinguishing powders which enables their re-use, while being of high efficiency, as well as advantageous under both the implementative and economical points of view.

### SUMMARY OF THE INVENTION

The above object has been achieved by a process for the recovery of extinguishing powders comprising the steps of:
a) providing polyvalent extinguishing powder; said extinguishing powder comprising ammonium phosphate, ammonium sulphate, colouring agents, fludifying agents and water-repellent agents, such as silicone oils, wherein the amount of ammonium phosphate is at least 20% by weight on the powder weight;
b) contact said polyvalent extinguishing powder with an aprotic solvent, thereby obtaining a suspension;
c) adding water; and
d) separating the aqueous liquid phase.

It has been surprisingly found that it is possible to remove the polluting components from the extinguishing powders and obtain a solution rich in nitrogen and phosphorus, hence extremely suitable as a fertilizer and as a catalyst for adhesives.

For the purposes of the present invention, with the expression "polyvalent extinguishing powder" it is meant an extinguishing powder comprising ammonium phosphate, ammonium sulphate, colouring agents, fluidifying agents and water-repellent agents, such as silicone oils, wherein the amount of ammonium phosphate is at least 20% by weight on the powder weight.

In another aspect, the present invention thus concerns the aqueous solution obtainable by said process.

A further aspect of the present invention concerns a plant for implementing the process for the recovery of polyvalent extinguishing powders, comprising:
- at least one loading unit of the extinguishing powders;
- at least one batch-type chemical reactor, comprising an inlet for feeding the solvent; and
- at least one unit for separating the liquid phase from the solid phase.

The characteristics and advantages of the present invention will be evident from the following detailed description and the working examples provided for illustrative purposes.

### DETAILED DESCRIPTION OF THE INVENTION

The invention therefore relates to a process for the recovery of extinguishing powders, comprising the steps of:
a) providing polyvalent extinguishing powder; said extinguishing powder comprising ammonium phosphate, ammonium sulphate, colouring agents, fluidifying agents and water-repellent agents, such as silicone oils, wherein the amount of ammonium phosphate is at least 20% by weight on the powder weight;
b) contact said polyvalent extinguishing powder with an aprotic solvent, thereby obtaining a suspension;
c) adding water; and
d) separating the aqueous liquid phase.

The exhausted polyvalent extinguishing powders could potentially constitute a good fertilizer because of the presence of high nitrogen and phosphorus concentrations and could therefore validly be re-used in agriculture with a number of unquestionable advantages. However, the presence of silicone oils, fluidifying agents and colouring additives makes them water insoluble and at the same time heavily polluting, hence totally non-recommendable under the environmental point of view, also considering the fact that they are typically fine powders.

Consequently, since the direct use of these powders as such as fertilizers is not desirable, it has been surprisingly and advantageously found that the problem of the large amount of exhausted extinguishing powders to be disposed of can be overcome, while at the same time avoiding wastage of the useful substances contained therein, by suitably treating said powders according to the process of the present invention as above reported.

In particular, in step a) preferably exhausted polyvalent extinguishing powder is provided, i.e. for which the legal expiring date has been reached, having thus become waste to be disposed of.

In step b), said extinguishing powder is contacted with an aprotic solvent, thereby obtaining a suspension.

In this respect, it was surprisingly found that the treatment of said powders with an aprotic solvent enables the organic components present therein to be removed, namely colouring agents, fluidifying agents and water-repellent agents, to produce a suspension.

Preferably, said aprotic solvent is acetone, methyl ethyl ketone, pentane, hexane, cyclohexane, dichloromethane, benzene, tetrahydrofuran (THF), ethyl acetate, dimethylformamide (DMFA), dioxane, acetonitrile, dimethyl sulphoxide (DMSO), carbon tetrachloride, diethyl ether, toluene, xylene, or mixtures thereof.

More preferably, said aprotic solvent is acetone, methyl ethyl ketone, pentane, hexane, cyclohexane, benzene, toluene, or mixtures thereof.

According to a preferred embodiment, the solvent is acetone because it is particularly advantageous in terms of solubilisation yield, but also under the economical and plant engineering point of view.

Preferably, step b) is carried out under stirring in order to further promote and accelerate solubilisation of the organic components.

Preferably, in step b) the weight ratio between solvent and extinguishing powder is at least 1:1, more preferably at least 2:1. Indeed, by increasing the amount of solvent, the solubilisation rate of the organic components is increased.

Preferably, the process of the invention further comprises a step b') of separating the organic liquid phase from the solid phase of said suspension, said step b') being carried out after step b) and before step c). In this manner, the organic components dissolved in the aprotic solvent are removed from the solid residue containing the ammonium salts.

Preferably, said separation is carried out by filtration, more preferably by filtration under high pressure.

Advantageously, steps b) and b') can be repeated more than once, such as to remove even the smallest remaining organic residues.

Step c) is carried out by adding water. In this manner, solubilisation of the inorganic components, i.e. ammonium salts, of the extinguishing powders is achieved.

Preferably, step c) is carried out under stirring, such as to further enhance and accelerate solubilisation of the inorganic components.

Preferably, the water of step c) is distilled water, deionised water, water purified by reverse osmosis, or de-mineralised water.

In order to further promote the solubilisation, the water in step c) preferably has a temperature of at least 40° C, more preferably at least 60° C.

Finally, in step d) the aqueous liquid phase so obtained is separated from the residual sludge which will be disposed of separately or fed back to step b) or b'). According to a preferred embodiment, the aprotic solvent is separated before step c) or before step d), and recycled in step b). This separation can be carried out by distillation under vacuum.

In another aspect, the present invention hence concerns the aqueous solution obtainable by the above described process, comprising at least 90% by weight of water, ammonium phosphate and ammonium sulphate, preferably at least 95% by weight of water, ammonium phosphate and ammonium sulphate, the remainder being organic residue and/or solvent traces not removed.

According to a preferred embodiment, said aqueous solution consists of water, ammonium phosphate and ammonium sulphate.

Advantageously, said aqueous solution is an excellent fertilizer owing to the high content of nitrogen and phosphorus. This solution can be optionally concentrated and/or supplemented with other water-soluble potassium, calcium or magnesium compounds, or even be mixed with other fertilizers to enhance its effectiveness. In the latter case, said aqueous solution can be advantageously used as starting material for the production of micro-granular fertilizers.

It was also noted that, by virtue of the high ammonium salt content, said aqueous solution can also conveniently be used as an acid catalyst for adhesives, for example in the wood industry, since it is able to significantly accelerate adhesion. In this industry, acid solutions obtained by solubilising ammonium sulphate (30% solution) are in fact typically utilised.

In a further aspect, the present invention concerns a plant for implementing the above described process, comprising:
- at least one loading unit of the extinguishing powders;
- at least one batch-type chemical reactor, comprising an inlet for feeding the solvent; and
- at least one unit for separating the liquid phase from the solid phase.

In particular, the plant firstly comprises i) at least one loading unit for the extinguishing powders.

In accordance with a preferred embodiment, the extinguishing powders are conveyed in a suitable suction hopper for subsequent transfer to the chemical reactor. The desired amount can preferably be set from the control panel and is determined by an accurate weighing system with load cells. Said cells, by constantly monitoring the powder weight, enable automatic control of the batching and loading cycle.

The plant also comprises ii) at least one batch-type chemical reactor, comprising an inlet for feeding the solvent. Steps b) to c) of the process of the invention are implemented inside said reactor.

Finally, the plant comprises iii) at least one unit for separating the liquid phase from the solid phase. In this unit, step d) of the process of the invention is carried out.

In accordance with a preferred embodiment, said separation unit is a filter press.

Preferably the plant further comprises iv) at least one unit for collecting separated solvent to be recycled. Indeed, the solvent can be advantageously recovered and recycled within the plant, preferably by a vacuum evaporator to avoid the release and dispersion of gases, such as ammonia.

Working examples of the present invention provided for illustrative purposes are given below.

### EXAMPLES

### Example 1. Recovery of polyvalent extinguishing powders according to the present invention

The following kit was used to implement the present example:
- 1 analytical balance, Scaltec SBA 32;
- 1 heating plate, Falc Instruments F70 model;
- 1 pipette, BRAND Transferpette 0.5-5 ml model;
- 1 250 ml glass flask;
- 1 glass funnel;
- 1 glass crystallizer;
- 1 magnetic stirring bar;
- 1 filter paper.

### Procedure:

About 25 g of exhausted blue extinguishing powder ABC and about 50 g of acetone were weighed into a 250 ml glass flask. This was followed by stirring with a magnetic bar for about 10 minutes, with the flask stoppered. Stirring was then interrupted, allowing the solution to rest for about 10 minutes. A pipette was then used to remove the acetone wherein a portion of the colouring agents, silicone oil, fluidifying agents was dissolved and a portion of the solute was suspended. About 125 g of distilled water were then added to the flask, the entire solution was stirred for about 10 minutes, and the water temperature was raised to about 50°C. A dispersion was thus obtained which was filtered through filter paper, by means of a glass funnel, into a crystallizer. The filtered solution, containing monoammonium phosphate and ammonium sulphate, appeared straw yellow in colour.

### Analysis of the aqueous solution obtained:

Mass spectrometry analysis was undertaken on the solution directly obtained by the above given procedure, thus enabling the following components to be determined:

| | |
|---|---|
| Total nitrogen (as N) | 31080 mg/kg |
| Phosphorus (as P₂O₅ | 51159 mg/kg |
| Silicon | 135 mg/kg |
| Silicone oil | n.d (*) |
| Colouring agents | n.d. (*) |
| Fluidifying agents | n.d. (*) |
| Dry residue | 20.29% w/vol |

| | |
|---|---|
| (*) below the detection threshold of the instrument i.e. <5 mg/kg | |

This analysis confirmed the high nitrogen and phosphorus content, which was suitable for the purposes indicated above, and also confirmed that the organic components initially present in the starting extinguishing powders, i.e. silicone oil and colouring agents, had been almost completely removed.

### Example 2. Production of NPK micro-granular fertilizer formulations

The following kit was used to implement the present example:
- 1 analytical balance, Scaltec SBA 32;
- 1 heating plate, Falc Instruments F70 model;
- 1 pipette, BRAND Transferpette 0.5-5 ml model;
- 1 250 ml glass flask;
- 1 glass funnel;
- 1 glass crystallizer;
- 1 magnetic stirring bar;
- 1 filter paper;
- GVR7 laboratory granulator, LB Technology

### Procedure:

The procedure undertaken in example 1 was followed, but in this case the final aqueous solution was further concentrated. Hence 1600 g of a concentrated suspension (23% water) was obtained. This suspension was used for the production of NPK micro-granular fertilizer in a laboratory granulator GVR7 by LB Technology with 1000 g of monoammonium phosphate powder (0.200-0.400 mm) and 1000 g of potassium sulphate powder (0.200-0.400 mm). The product was dried, bringing the final moisture content to below 2% by weight, with a final NPK content of 9-23-14 respectively.

It could hence be noted that the solution obtained from the process of the invention could be advantageously combined with other water soluble potassium compounds to enhance the fertilizing effectiveness.

From the detailed description and the examples given above, the advantages achieved by the process of the invention are evident. In fact, it was possible not only to overcome the problem of the large amount of exhausted extinguishing powders to be disposed of while at the same time avoiding wastage of useful substances contained therein, but also to obtain a good fertilizer in a rapid, economical, and totally eco-compatible manner, or alternatively an excellent acid catalyst for adhesives.

## Claims

1. Process for the recovery of extinguishing powders comprising the steps of:
a) providing polyvalent extinguishing powder, comprising ammonium phosphate, ammonium sulphate, colouring agents, fluidifying agents and water-repellent agents, wherein the amount of ammonium phosphate is at least 20% by weight on the powder weight;
b) contact said polyvalent extinguishing powder with an aprotic solvent, thereby obtaining a suspension;
c) adding water; and
d) separating the aqueous liquid phase.

2. The process of claim 1, wherein said aprotic solvent is acetone, methyl ethyl ketone, pentane, hexane, cyclohexane, dichloromethane, benzene, tetrahydrofuran (THF), ethyl acetate, dimethylformamide (DMFA), dioxane, acetonitrile, dimethyl sulphoxide (DMSO), carbon tetrachloride, diethyl ether, toluene, xylene, or mixtures thereof.

3. The process of claim 2, wherein said aprotic solvent is acetone, methyl ethyl ketone, pentane, hexane, cyclohexane, benzene, toluene or mixtures thereof.

4. The process of claim 3, wherein said aprotic solvent is acetone.

5. The process of any one of claims 1-4, further comprising a step b') of separating the organic liquid phase from the solid phase of said suspension, said step b') being carried out after step b) and before step c).

6. The process of any one of claims 1-5, wherein in step b), the weight ratio of aprotic solvent to extinguishing powder is at least 1:1.

7. The process of claim 6, wherein in step b) the weight ratio of aprotic solvent to extinguishing powder is at least 2:1.

8. The process of any one of claims 1-7, wherein the separation step b') is carried out by filtration.

9. The process of any one of claims 1-8, wherein the temperature of the water of step c) is at least 40 °C.

10. The process of any one of claims 1-9, wherein the aprotic solvent is separated before step c) or before step d), and recycled in step b).

## Patentansprüche

1. Verfahren zur Aufbereitung von Löschpulvern, die folgenden Schritte umfassend:
a) Bereitstellen eines polyvalenten Löschpulvers, umfassend Ammoniumphosphat, Ammoniumsulphat, Farbstoffe, Verflüssiger und wasserabweisende Substanzen, wobei die Menge Ammoniumphosphat wenigstens 20 Gew.-% des Pulvergewichts beträgt;
b) Inkontaktbringen des polyvalenten Löschpulvers mit einem aprotischen Lösungsmittel, wodurch eine Suspension erhalten wird;
c) Zugabe von Wasser; und
d) Abscheiden der wässrigen Flüssigkeitsphase.

2. Verfahren nach Anspruch 1, wobei das aprotische Lösungsmittel Aceton, Methylethylketon, Pentan, Hexan, Cyclohexan, Dichlormethan, Benzol, Tetrahydrofuran (THF), Ethylacetat, Dimethylformamid (DMFA), Dioxan, Acetonitril, Dimethylsulphoxid (DMSO), Tetrachlorkohlenstoff, Diethylether, Toluol, Xylol oder Mischungen davon ist.

3. Verfahren nach Anspruch 2, wobei das aprotische Lösungsmittel Aceton, Methylethylketon, Pentan, Hexan, Cyclohexan, Benzol, Toluol oder Mischungen davon ist.

4. Verfahren nach Anspruch 3, wobei das aprotische Lösungsmittel Aceton ist.

5. Verfahren nach einem der Schritte 1 bis 4, ferner umfassend einen Schritt b') des Abscheidens der organischen flüssigen Phase von der festen Phase der Suspension, wobei Schritt b') nach Schritt b) und vor Schritt c) ausgeführt wird.

6. Verfahren nach einem der Schritte 1 bis 5, wobei in Schritt b) das Gewichtsverhältnis des aprotischen Lösungsmittels zu dem Löschpulver mindestens 1:1 ist.

7. Verfahren nach Anspruch 6, wobei in Schritt b) das Gewichtsverhältnis des aprotischen Lösungsmittels zu dem Löschpulver mindestens 2:1 ist.

8. Verfahren nach einem der Schritte 1 bis 7, wobei der Abscheidungsschritt b') durch Filtern ausgeführt wird.

9. Verfahren nach einem der Schritte 1 bis 8, wobei die Temperatur des Wassers aus Schritt c) mindestens 40 °C beträgt.

10. Verfahren nach einem der Schritte 1 bis 9, wobei das aprotische Lösungsmittel vor Schritt c) oder vor Schritt d) abgeschieden und in Schritt b) aufbereitet wird.

## Revendications

1. Procédé pour le recyclage de poudre extinctrice comprenant les étapes consistant à :
a) fournir une poudre extinctrice polyvalente, composée de phosphate d'ammonium, de sulfate d'ammonium, d'agents colorants, d'agents fluidifiants et d'agents hydrofuges, la quantité de phosphate d'ammonium représentant au moins 20 % en poids de la poudre ;
b) mettre en contact ladite poudre extinctrice polyvalente avec un solvant aprotique, obtenant ainsi une suspension ;
c) ajouter de l'eau ; et
d) séparer la phase liquide aqueuse.

2. Procédé selon la revendication 1, ledit solvant aprotique étant de l'acétone, du méthyléthylcétone, du pentane, de l'hexane, du cyclohexane, du dichlorométhane, du benzène, du tétrahydrofurane (THF), de l'acétate d'éthyle, du diméthylformamide (DMFA), du dioxane, de l'acétonitrile, du diméthylsulfoxyde (DMSO), du tétrachlorure de carbone, de l'éther diéthylique, du toluène, du xylène, ou des mélanges de ces substances.

3. Procédé selon la revendication 2, ledit solvant aprotique étant de l'acétone, du méthyléthylcétone, du pentane, de l'hexane, du cyclohexane, du benzène, du toluène ou des mélanges de ces substances.

4. Procédé selon la revendication 3, ledit agent aprotique étant de l'acétone.

5. Procédé selon l'une quelconque des revendications 1 à 4, comprenant en outre une étape b') consistant à séparer la phase liquide organique de la phase solide de ladite suspension, ladite étape b') étant effectuée après l'étape b) et avant l'étape c).

6. Procédé selon l'une quelconque des revendications 1 à 5, à l'étape b), le rapport pondéral du solvant aprotique sur la poudre extinctrice étant d'au moins 1:1.

7. Procédé selon la revendication 6, à l'étape b), le rapport pondéral du solvant aprotique sur la poudre extinctrice étant d'au moins 2:1.

8. Procédé selon l'une quelconque des revendications 1 à 7, l'étape de séparation b') étant effectuée par filtration.

9. Procédé selon l'une quelconque des revendications 1 à 8, la température de l'eau à l'étape c) étant d'au moins 40 °C.

10. Procédé selon l'une quelconque des revendications 1 à 9, le solvant aprotique étant séparé avant l'étape c) ou avant l'étape d), et réintroduit à l'étape b).
